Europäisches Patentamt

European Patent Office

Office européen des brevets

(11) Veröffentlichungsnummer: **0 182 280**
**A2**

(12) **EUROPÄISCHE PATENTANMELDUNG**

(21) Anmeldenummer: 85114451.9

(22) Anmeldetag: 13.11.85

(51) Int. Cl.⁴: **C 08 K 9/10**
**// (C08K9/10, 3:08)**

(30) Priorität: 16.11.84 DE 3442031

(43) Veröffentlichungstag der Anmeldung: **28.05.86**
**Patentblatt 86/22**

(84) Benannte Vertragsstaaten: **AT BE CH DE FR GB IT LI LU NL SE**

(71) Anmelder: **Siemens Aktiengesellschaft, Berlin und München Wittelsbacherplatz 2, D-8000 München 2 (DE)**

(72) Erfinder: **Quella, Ferdinand, Dr., Cramer-Klett-Strasse 2, D-8014 Neubiberg (DE)**
Erfinder: **Leute, Ulrich, Dr., Herzogplatz 17, D-8011 Zorneding (DE)**

(54) **Füllstoff auf der Basis von mit Kunststoff vernetztem Metallpulver für die Herstellung von Kunststoffmassen.**

(57) Für die Herstellung von spritzgieß- oder preßbaren Kunststoffmassen mit hoher Wärmeleitfähigkeit und hohem elektrischen Isolationsvermögen wird ein Füllstoff vorgeschlagen, bestehend aus in möglichst dichter Packung vorliegenden Metallkörnern (21, 22), die mit einer allseitig durch Vernetzen (24) hergestellten Kunststoffumhüllung (23) versehen sind. Durch die vernetzende Umhüllung (23, 24) wird eine hohe Abriebfestigkeit erreicht. Im Füllstoff erreicht der Metallanteil bis zu 90 Vol.-% und läßt sich in Spritzgieß- und Preßmassen einarbeiten. Durchschlagsspannungen größer 100 V werden erreicht.

Siemens Aktiengesellschaft          Unser Zeichen
Berlin und München                 VPA   84 P 1332 E

Füllstoff auf der Basis von mit Kunststoff vernetztem Metallpulver für die Herstellung von Kunststoffmassen.

Die Erfindung betrifft einen Füllstoff auf der Basis von mit Kunststoffen vernetzten Metallpulver für die Herstellung von spritzgieß- oder preßbaren Kunststoffmassen mit hoher Wärmeleitfähigkeit und hohem elektrischem Isolationsvermögen.

Wärmeableitende Kunststoffe, die zugleich nicht-elektrisch leitfähig sind, müssen eine Umhüllung besitzen, die den üblichen Verarbeitungsbedingungen, wie dem Extrudieren oder Spritzgießen widerstehen. Die dabei auftretenden hohen Scherkräfte können nur durch eine vernetzende Umhüllung aufgefangen werden.

Ein Füllstoff der eingangs genannten Art in der Form eines Thermoplasten ist beispielsweise bekannt aus der deutschen Patentanmeldung P 34 21 105.5. Dabei werden Polyolefine in Gegenwart von Leichtmetall- oder Buntmetallpulver mittels eines Ziegler-Katalysators synthetisiert und zumindest in der Nähe des Metallpartikels vernetzt. Der so erzeugte Kunststoff wird entweder für sich allein oder als Legierung mit anderen Polymeren zur Wärmeabfuhr bei gleichzeitiger elektrischer Isolation in der Elektronik oder Elektrotechnik eingesetzt. Der hier beschriebene thermoplastische Kunststoff, der auch als "Füllstoff" für Gießharze verwendet werden kann, bereitet Schwierigkeiten, wenn er nachträglich in zerkleinerter Form in einen Thermoplasten (Gebrauchstemperatur $> 140°C$) eingearbeitet werden soll. Mit Ziegler-Katalysatoren

Edt 1 Plr/23.10.1984

lassen sich zudem nur einige Olefine wie zum Beispiel Ethylen zu dem wenig wärmestabilen Polyethylen polymerisieren. Zudem ist das ZieglerVerfahren nur in besonderen Reaktoren unter Ausschluß von Luft und Feuchtigkeit durchführbar.

Das einfache Einmischen von Metallkörnern in Gießharze und das anschließende Zerkleinern der polymerisierten Harze führt ebenso nicht zu geeigneten Füllstoffen für spritzgießbare Thermoplaste, weil beim Zerkleinern die Hüllschicht ungleichmäßig wird und sich somit keine sehr dichte Packung erzielen läßt bzw. die isolierende Hüllschicht abspringt und die gefüllten Thermoplaste nicht die geforderten Isolationswerte erreichen. Direkt in Gießmassen eingearbeitete Metallkörner führen auch nur zu Wärmeleitfähigkeiten von 1,5 W/mk.

Die Aufgabe, die der Erfindung zugrundeliegt, besteht in der Schaffung eines Füllstoffes für spritzgieß- oder preßbare Kunststoffmassen, der den folgenden Bedingungen gerecht wird:

1. hohe Wärmeleitfähigkeit (2 ... 10 W/mk),

2. elektrische Isolation bei Durchschlagsspannungen größer 100 V,

3. hohe Abriebfestigkeit vor der Einarbeitung in die Kunststoffmassen,

4. Erreichen von Füllgraden in Bereichen von 50 bis 90 Vol%.

Diese Bedingungen werden bei einem Füllstoff der eingangs genannten Art erfüllt, der erfindungsgemäß durch in möglichst dichter Packung vorliegende Metallkörner, die allseitig mit einer durch Vernetzen hergestellten Kunststoffumhüllung versehen sind, gekennzeichnet ist.

Es liegt im Rahmen der Erfindung, den Durchmesser der Metallkörner im Bereich von 5 bis 100 μm zu wählen und Metallkörner zu verwenden, die aus vorzugsweise mit einer, mehrere Moleküllagen dicken Oxidschicht versehenem Eisen, Kupfer, Kobalt, Vanadium, Nickel, Silber oder Aluminium bestehen oder Legierungen daraus.

In einer Weiterbildung des Erfindungsgedankens ist vorgesehen, daß die das Metallkorn umhüllende Kunststoffschicht eine Dicke bis maximal 5 μm aufweist und aus einem der folgenden Kunststoffe besteht: ungesättigte Polyesterharze, Epoxidharze, Polyphenylensulfid, radikalisch-polymerisierbare Monomere mit Vernetzungshilfsstoffen.

Weitere Ausgestaltungen der Erfindung, insbesondere Verfahren zur Herstellung des Füllstoffes, ergeben sich aus den Unteransprüchen.

Von Bedeutung bei dem erfindungsgemäßen Füllstoff ist, daß gewährleistet wird, daß jedes Metallpulverkorn mit einer vernetzten Kunststoffumhüllung versehen ist, was nur erfolgt, wenn die Polymerisation an der Phasengrenze Metall/Lösungsmittel sehr schnell beginnt und das Metallkorn mit einer gleichmäßigen Polymerschicht umgeben wird. Bei der sogenannten Emulsions- oder Suspensions-Polymerisation nach der Lehre der Erfindung ist dies der Fall. Die Metallkörner werden vor der Vernetzung in einem Medium suspendiert oder emulgiert, der Suspension oder Emulsion der zu vernetzende Stoff in einer Konzentration von 0,1 bis 5 % Massenanteil bezogen auf das Lösungsmittel, gegebenenfalls unter Zusatz eines Beschleunigers oder Initiators (auch Redoxsystems), zugesetzt, die Polymerisation bei Zimmer- oder erhöhter Temperatur, gegebenenfalls unter Lichteinwirkung durchgeführt und die durch Vernetzung mit dem Kunststoff umhüllten Metallkörner in einem, die Kunststoffumhüllung nichtlösenden Medium abgetrennt.

Die so umhüllten Kugeln können in das gleiche Polymer, aber auch in höher wärmebeständige Polymere eingearbeitet werden. Wesentlich ist, daß durch die Vernetzung die als Schutzschicht wirkende Kunststoffumhüllung bei der Verarbeitung nicht reißen kann. Bei Verträglichkeitsproblemen mit dem Polymer, dem die Kugeln zugemischt werden sollen, kann zur Umhüllung noch ein weiteres Monomer zugesetzt werden, das heißt die Umhüllung besteht dann aus einem vernetzten Copolymer.

Weitere Einzelheiten der Erfindung und Möglichkeiten zur Durchführung der Umhüllverfahren werden nachfolgend anhand von drei Ausführungsbeispielen und der dazugehörigen Figuren 1 bis 3 noch näher erläutert. Dabei zeigt

die Figur 1 den Mechanismus beim Umhüllen eines zum Beispiel aus Aluminium bestehenden Metallkorns mit einem Monomer, zum Beispiel Styrol, Divinylbenzol und Benzoylperoxid als Initiator nach dem Prinzip der Emulsionspolymerisation,

die Figur 2 das beschleunigte Vernetzen eines Eisenkorns mit Polyphenylensulfid in Benzoesäurebenzylester und

die Figur 3 das beschleunigte Vernetzen von ungesättigtem Polyesterharz durch Zersetzung von Peroxid an der Oberfläche eines aus zum Beispiel Kobalt bestehenden Metallkornes nach dem Prinzip der Suspensionspolymerisation.

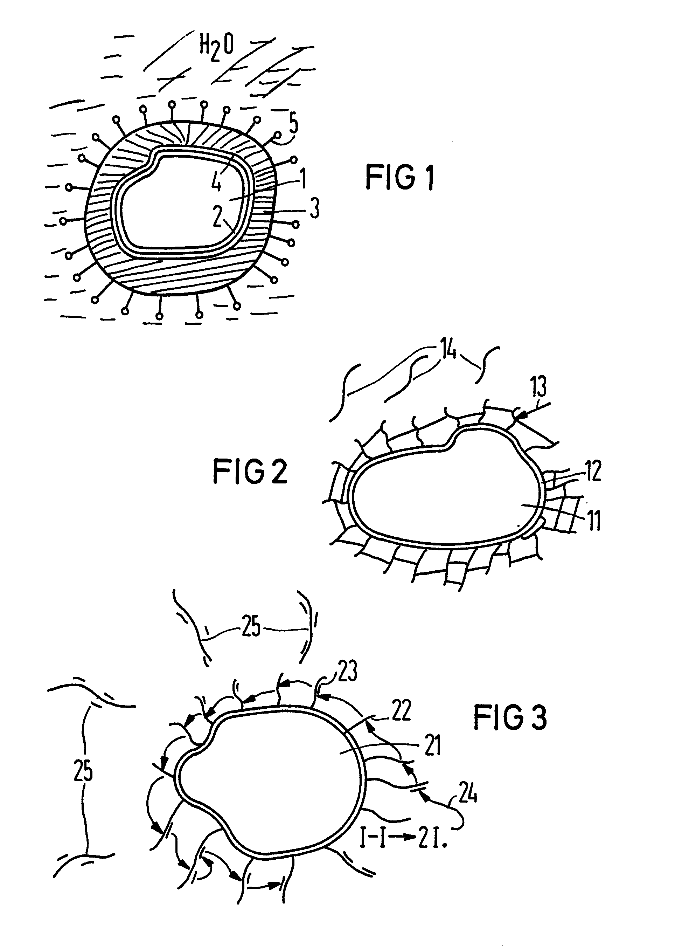

Figur 1: Die Umhüllung des aus zum Beispiel mit einer Oxidschicht 2 versehenen Aluminiumkorns 1 mit einer ca.

5 µm dicken Polymerschicht 3 bestehend aus einem Monomergemisch, zum Beispiel Styrol und Divinylbenzol mit dem Initiator Benzoylperoxid, geschieht dadurch, daß die mit einer monomolekularen hydrophobierenden Schicht 4, zum Beispiel aus Silan, versehenen Metallkörner 1, 2 in Wasser ($H_2O$) unter schnellem Rühren mit ca. 1 % (bezogen auf die $H_2O$-Menge) eines Emulgators, zum Beispiel Natrium-Laurylsulfat, oder einer nicht-ionogenen Seife, zum Beispiel Arcopal N 100, oder anionenaktiven Seife, zum Beispiel Cetylammoniumchlorid, dispergiert wird. Danach werden 0,1 bis 5 % (bezogen auf die Wassermenge) eines radikalisch-polymerisierbaren Monomers, zum Beispiel Styrol, Vinylacetat, Acrylnitril, zusammen mit einem 1 bis 20 %i-gen Anteil (bezogen auf die Gesamtmonomermenge) eines Vernetzungsmonomers, zum Beispiel Divinylbenzol oder Triallylcyanurat zugesetzt. Die Polymerisation wird ausgelöst durch Erwärmen auf ca. 60°C, wobei ein bei dieser Temperatur zerfallender Initiator, zum Beispiel Azoisobutyronitril oder Benzoylperoxid zugesetzt wird (Konzentration 1 bis 3 % bezogen auf den Monomeranteil). Bei Raumtemperatur kann auch ein Redoxsystem, zum Beispiel Natriumdithionit/ Kaliumperoxodisulfat verwendet werden. Die in Figur 1 mit dem Bezugszeichen 5 gekennzeichneten Symbole stellen das hydrophile Ende des Seifenmoleküls dar.

Figur 2: Eisenkörner 11 mit einem Durchmesser im Bereich von 5 bis 50 µm werden an ihrer Oberfläche mit einer aus $Fe_2O_3$ bestehenden Oxidschicht 12 versehen. Dann werden die Eisenkörner 11, 12 in hochsiedenden Lösungsmitteln suspendiert, wobei solche Lösungsmittel ausgewählt werden, in denen sich niedermolekulares Polyphenylensulfid (PPS) löst. Dies gelingt zum Beispiel mit V1-Pulver - ein niedermoleku-lares PPS der Firma Philips Petroleum - bei 150°C bereits zu 1 bis 2 % Massenanteil in Benzoesäurebenzylester. Bei Temperaturen um 150°C verändert sich das Polymer noch nicht.

Die Suspension wird hergestellt durch Einbringen von zum Beispiel 10 Gramm oxidiertem Eisenpulver 11, 12 in 100 ml Benzoesäurebenzylester und schnelles Rühren. Weitere geeignete Lösungsmittel sind zum Beispiel Diphenylether oder Chlornaphthalin. Der Suspension setzt man dann zwei Gramm Polyphenylensulfid (PPS-V1) zu und beläßt die Suspension bei 280°C bis 8 Stunden lang. Das Polymer vernetzt dabei um das oxidierte Eisenpulver 11, 12 herum und bildet eine feste Polymerschicht. Die Vernetzung in der Lösung ist um Größenordnungen langsamer, so daß keine unlöslichen Partikel außerhalb der Körner entstehen. Der Pfeil 13 zeigt auf das absorbierte Polyphenylensulfid mit den Vernetzungsstellen. Die mit dem Bezugszeichen 14 gekennzeichneten Symbole sollen die gelösten Polyphenylensulfidmoleküle in Benzoesäurebenzylester darstellen.

Die mit der Polymerschicht 13 umhüllten Eisenkügelchen 11, 12 werden abfiltriert und von gelöstem PPS und Lösungsmittel abgetrennt. Restlösungsmittel wird durch kurzzeitiges Suspendieren in Methanol entfernt.

Bestehen die mit Polyphenylensulfid zu umhüllenden Kügelchen aus anderen Metallen, dann werden sie in möglichst poröser Form mit $Fe_2O_3$-Pulver durch Auftrommeln oder durch Zugabe beim Mahlen behandelt und in gleicher Weise wie oben beschrieben verarbeitet.

Figur 3: 10 Gramm mit einer Oxidschicht 22 versehene Metallkörner 21 aus Kobalt werden in 100 ml Dimethylformamidlösung eines ungesättigten Polyesterharzes, zum Beispiel 0,5 % Palatal P4 (BASF) unter schnellem Rühren bei Raumtemperatur suspendiert. Dazu werden 10 ml einer 5 %igen Lösung von Benzoylperoxid in Phthalsäureester getropft. Nach weiteren zwei Stunden fortgesetzten Rührens wird langsam auf 80°C erwärmt, um die Masse ausreagieren zu lassen. Die mit dem Bezugzeichen 23 versehenen Symbole stellen das adsorbierte, ungesättigte Polyesterharz dar, während mit den Pfeilen 24 die Vernetzungsauslösung symbolisiert werden soll. Die mit 25 gekennzeichneten Symbole sind die gelösten Polymermoleküle mit den Doppelbindungen. I-I ist das Initiatormolekül, zum Beispiel Benzoylperoxid.

Wie insbesondere aus der Figur 3 zu ersehen ist, beginnt die Polymerisation an der Phasengrenze Metall/Lösungsmittel sehr schnell und das Metallkorn 21, 22 wird von einem Polymerfilm 23 (24) umgeben.

Die Gewinnung der umhüllten Körner, die sofort als Füllstoff verwendet werden können, erfolgt durch Ausfällen in einem Nicht-Lösungsmittel wie Methanol.

Der nach dem erfindungsgemäßen Verfahren hergestellte Füllstoff weist eine hohe Abriebfestigkeit auf, wirkt elektrisch bei Durchschlagsspannungen größer 100 V und erreicht Füllgrade bis zu 90 Vol %.

Die Polymerisation der Epoxidharze erfolgt analog dem Verfahren für die ungesättigten Polyesterharze. Zu den Metallkörnern wird ein komplexierendes vorzugsweise chelatbildendes Amin, bei Kupfer zum Beispiel Ethylendiamin, gegeben, das sich als Komplex an die Metalloberfläche anlagert. Dadurch erfolgt die Polymerisation des zugesetzten Epoxidharzes nur an der Metalloberfläche. Je nach Aktivität der Amine wird die Polymerisation innerhalb von bis zu 8 Stunden durchgeführt, wobei die Temperatur allmählich auf bis zu 120°C gesteigert wird. Als Lösungsmittel wird Xylol verwendet.

17 Patentansprüche
3 Figuren

Patentansprüche

1. Füllstoff auf der Basis von mit Kunststoffen vernetztem Metallpulver für die Herstellung von spritzgieß- oder preßbaren Kunststoffmassen mit hoher Wärmeleitfähigkeit und hohem elektrischen Isolationsvermögen, g e k e n n - z e i c h n e t   d u r c h   in möglichst dichter Packung vorliegende Metallkörner (1, 2, 11, 12, 21, 22), die allseitig mit einer durch Vernetzen hergestellten Kunststoffumhüllung (3, 13, 23) versehen sind.

2. Füllstoff nach Anspruch 1, d a d u r c h   g e - k e n n z e i c h n e t ,   daß der Durchmesser der Metallkörner (1, 11, 21) im Bereich zwischen 5 bis 100 µm liegt.

3. Füllstoff nach Anspruch 1 und/oder 2, d a d u r c h g e k e n n z e i c h n e t ,   daß die Metallkörner (1, 11, 21) aus vorzugsweise mit einer Oxidschicht (2, 12, 22) versehenem Eisen, Kupfer, Kobalt, Vanadium, Nickel, Silber, Aluminium, und deren Legierungen bestehen.

4. Füllstoff nach Anspruch 3, d a d u r c h   g e - k e n n z e i c h n e·t ,   daß die Oxidschicht (2, 12, 22) im Bereich mehrerer Moleküllagen liegt.

5. Füllstoff nach mindestens einem der Ansprüche 1 bis 4, d a d u r c h   g e k e n n z e i c h n e t ,   daß die umhüllende Kunststoffschicht (3, 13, 23) eine Dicke bis maximal 5 µm aufweist.

6. Füllstoff nach mindestens einem der Ansprüche 1 bis 5, d a d u r c h   g e k e n n z e i c h n e t ,   daß die das Metallkorn (1, 2, 11, 12, 21, 22) umhüllende Schicht (3, 13, 23) aus einem der folgenden Kunststoffe besteht: ungesättigte Polyesterharze, Epoxidharze, Polyphenylensulfid, radikalisch-polymerisierbare Monomere mit Vernetzungs

0182280

hilfsstoffen.

7. Verfahren zum Herstellen des Füllstoffes nach mindestens einem der Ansprüche 1 bis 6, d a d u r c h g e k e n n z e i c h n e t , daß

a) die Metallkörner (1, 2, 11, 12, 21, 22) vor der Vernetzung in einem nichtwäßrigen Medium suspendiert oder mittels einer hydrophobierenden Substanz (4) in Wasser emulgiert werden,

b) der Suspension oder Emulsion der zu vernetzende Stoff in einer Konzentration von 0,1 bis 5 %, gegebenenfalls unter Zusatz eines Beschleunigers oder Redoxsystems als Initiator oder eines thermisch zuerfallenden Initiators, zugesetzt wird,

c) die Polymerisation bei Zimmertemperatur oder erhöhter Temperatur, gegebenenfalls auch unter Lichteinwirkung, durchgeführt wird und

d) die durch Vernetzung mit dem Kunststoff umhüllten Metallkörner (1, 2, 3, 11, 12, 13, 21, 22, 23) durch Ausfällen in einem, die Kunststoffumhüllung nicht lösenden Medium abgetrennt werden.

8. Verfahren nach Anspruch 7, d a d u r c h g e k e n n z e i c h n e t , daß zur Herstellung eines Füllstoffes, bestehend aus Aluminiumkörnern (1), die mit einer Umhüllung (3) von radikalisch-polymerisierbaren Monomeren mit Vernetzungshilfsstoffen versehen sind,

a) auf die Aluminiumkörner (1) im oxidierten Zustand (2) eine monomolekulare, hydrophobierende Schicht (4) durch Behandlung mit zum Beispiel Chlorsilanen in organischen Lösungsmitteln aufgebracht wird,

b) die hydrophobierten Aluminiumkörner (1, 2, 4) in einer Menge von 1 % in Wasser mit einem Emulgator dispergiert werden,

c) der Emulsion ein radikalisch-polymerisierbares Monomer, wie Styrol, Vinylacetat, Acrylnitril, zusammen mit einem 1 bis 20 %igen Anteil eines Vernetzungsmonomers, wie Divinylbenzol oder Triallylcyanurat, zugesetzt wird,

d) die Emulsion unter Zugabe eines Initiators wie Benzoylperoxid oder Azoisobutyronitril auf ca. 60°C erwärmt wird und

e) die umhüllten und in Wasser ausgefällten Aluminiumkörner (1, 2, 3, 4) abgetrennt werden.

9. Verfahren nach Anspruch 8, d a d u r c h   g e - k e n n z e i c h n e t ,   daß als Emulgator eine kationische Seife wie Natrium-Laurylsulfat, eine nichtionogene Seife oder anionenaktive Stoffe wie Cetylammoniumchlorid verwendet wird.

10. Verfahren nach Anspruch 8 oder 9, d a d u r c h g e k e n n z e i c h n e t ,   daß als Redoxsystem Natriumdithionit/Kaliumperoxodisulfat verwendet wird.

11. Verfahren nach Anspruch 7, d a d u r c h   g e - k e n n z e i c h n e t ,   daß zur Herstellung eines Füllstoffes bestehend aus oxidierten Eisenkörnern (11, 12), die mit einer Umhüllung von Polyphenylensulfid (13) versehen sind,

a) die oxidierten Eisenkörner (11, 12) in einem hochsiedenden, niedermolekulares Polyphenylensulfid lösenden Medium unter schnellem Rühren suspendiert werden,

b) der Suspension Polyphenylensulfid zugesetzt wird,

c) die Polymerisation bei 280°C in einer Zeitdauer bis
   ca. 8 Stunden durchgeführt wird und

d) die vernetzten Eisenkörner (11, 12, 13) nach dem
   Absetzen vom Lösungsmittel (14) getrennt werden.

12. Verfahren nach Anspruch 11, d a d u r c h   g e -
k e n n z e i c h n e t ,   daß das Restlösungsmittel
durch kurzzeitiges Suspendieren der vernetzten Eisenkörner (11, 12, 13) in Methanol entfernt wird.

13. Verfahren nach Anspruch 11 und/oder 12,   d a -
d u r c h   g e k e n n z e i c h n e t ,   daß als
Suspensionsmittel Benzoesäurebenzylester, Diphenylether
oder Chlornaphthalin verwendet werden.

14. Verfahren nach Anspruch 7,   d a d u r c h   g e -
k e n n z e i c h n e t ,   daß zur Herstellung eines
Füllstoffes bestehend aus oxidierten Metallkörnern (21,
22), die mit einer Umhüllung (23) aus ungesättigten
Polyesterharzen versehen sind,

a) die oxidierten Metallkörner (21, 22) in Dimethylformamidlösung, die das ungesättigte Polyesterharz
   enthält, unter schnellem Rühren bei Zimmertemperatur
   suspendiert werden,

b) in die Suspension der Beschleuniger in gelöster Form
   eingetropft wird und

c) die Polymerisation unter ständigem Rühren in einer
   Zeitdauer von 2 Stunden nach langsamem Erwärmen auf
   ca. 80°C durchgeführt wird.

15. Verfahren nach Anspruch 14,   g e k e n n z e i c h -

0182280

net durch die Verwendung von oxidierten Kobalt- oder Kupferkörnern, ungesättigtem Polyesterharz wie zum Beispiel Palatal (P4 Wz. der BASF) und einer 5 %igen Lösung von Benzoylperoxid in Phthalsäureester als Beschleunigungskompoente.

16. Verfahren nach Anspruch 7, d a d u r c h g e - k e n n z e i c h n e t , daß zur Herstellung eines Füllstoffes bestehend aus oxidierten Metallkörnern, die mit einer Umhüllung aus Epoxidharz versehen sind,

a) die oxidierten Metallkörner in hochsiedenden, nichtwäßrigen Lösungsmitteln suspendiert werden,

b) der Suspension das Epoxidharz und der Beschleuniger, vorzugsweise ein das Metallion komplexierendes Amin, zugesetzt wird und

c) die Polymerisation innerhalb von 8 Stunden bei einer Temperatur von 80 bis 120°C durchgeführt wird.

17. Verfahren nach Anspruch 16, d a d u r c h g e - k e n n z e i c h n e t , daß die Metallkörner aus Kupfer bestehen, daß als Amin Ethylendiamin und als Lösungsmittel Xylol verwendet wird.

1/1

0182280

FIG 1

FIG 2

FIG 3